# EUROPEAN PATENT APPLICATION

(11) **EP 3 617 899 A1**
(43) Date of publication of application: **04.03.2020**
(21) Application number: 19193751.5
(22) Date of filing: 27.08.2019
(51) Int. Cl.: G06F 16/25, G06F 16/2452

(54) **METHOD AND SYSTEM FOR RETRIEVING DATA FROM DIFFERENT SOURCES THAT RELATES TO A SINGLE ENTITY**

(30) Priority: 27.08.2018 IL 26141518
(71) Applicant: Phonemix Ltd., 4951766 Petach-Tikva (IL)
(72) Inventor: GOLOBRODSKY, Oleg, 4952203 Petach Tikva (IL); DRORI, Gideon, 4481000 Sha'arei Tikva (IL)
(74) Representative: Grünecker Patent- und Rechtsanwälte PartG mbB

(57) **Abstract**

A method and a system are provided that enable retrieval of a plurality of data records pertaining to a single user, wherein the data records are stored in at least one information source, and wherein each of the plurality of data records comprises at least two α numeric pre-defined fields, and the retrieval of the plurality of data records is based upon α numeric values stored in the at least two α numeric fields of the at least one information source.

## Description

### Technical Field

The present invention generally relates to retrieving data from various information sources. More particularly, the present invention relates to a system and a method for retrieval of data from different information sources that relates to a certain entity.

### Background

In today's world, people and businesses retain extensive amounts of data in various databases. In addition, it is rather common nowadays for a user to be registered with a large number of software applications, by providing different user's details (such as an e-address and perhaps other associated details) in the registration process with each of these software applications. Thus, users may often have different user names in various applications (which may also be defined in different formats), and receive and send messages over a variety of wired and wireless networks via a variety of devices, such as desktop computers, wired phones, wireless devices (e.g., phones and personal digital assistants ("PDAs")), and others, where certain details associated with these users are stored.

The European General Data Protection Regulation (GDPR) is an EU regulation on data protection and privacy for all individuals within the European Union (EU) and the European Economic Area (EEA). It also addresses the export of personal data outside the EU and EEA areas. The GDPR aims primarily to give to citizens and residents control over their personal data.

The regulation contains provisions and requirements pertaining to the processing of personally identifiable information inside the European Union, and applies to an enterprise established in the EU or-regardless of its location and the data subjects' citizenship-that is processing the personal data of people inside the EU. Controllers of personal data must put in place appropriate technical and organizational measures to implement the data protection principles.

Data protection, means that a business process that handles personal data must be designed and built in accordance with the data protection principles in order to provide safeguards to protect personal data, and use the highest-possible privacy settings by default, so that the data does not become publicly available without the person's explicit consent, and cannot be used to identify a subject without additional information stored separately. No personal data may be processed unless it is done under a lawful basis specified by the regulation or unless the data controller or processor has received an unambiguous and individualized affirmation of consent from the data subject.

Therefore, there is a need to be able to generate a consolidated data record for a single entry which comprises data retrieved from various databases and relate to the same entity. However, there are several problems which limit the ability to find all the relevant data associated with an entity in various databases. Multiple data records may exist for a particular entity as a result of separate data records received from one or more information sources, which in turn leads to a problem that may be referred to as data fragmentation. In case of data fragmentation, a query of the master database may not retrieve all of the relevant information about a particular entity. In addition, as described above, the query may miss some relevant information about an entity due to a typographical error made during the entry of the data, which would lead to the problem of data inaccessibility. These problems limit the ability to locate the information for a particular entity within one or more databases.

From the above description, it should be clear to any person skilled in the art that for addressing the issue at hand, it is required to identify and associate data records from various information sources that may contain information about the same entity. In addition, these conventional systems do not attempt to index data records from a plurality of different information sources (e.g. databases), and do not locate data records within the one or more information sources containing information about the same entity, to enable linking those data records together. Consequently, it would be desirable to be able to associate data records from a plurality of information sources which pertain to the same entity, despite discrepancies between attributes of these data records and to be able to assemble and present information from these various data records in a cohesive manner. However, in practice it might be rather difficult to provide an accurate, consolidated view of information from a plurality of information sources.

Thus, there is a need for a solution that provides means to enable consolidating data retrieved from a plurality of information sources which pertain to a single user, into one single consolidated database entry.

### Summary of the Disclosure

The disclosure may be summarized by referring to the appended claims.

It is an object of the present disclosure to provide a method and system for retrieving data relating to a single entity, derived from different records stored in different information sources.

It is another object of the present invention to provide a method and system for retrieving data relating to a single entity, derived from different records stored in different information sources, after identifying the single entity based on more than more features associated with that entity.

Other objects of the invention will become apparent as the description of the invention proceeds.

According to a first aspect of the disclosure there is provided a method for enabling retrieval of a plurality of data records pertaining to a single user, wherein said data records are stored in at least one information source, wherein each of the plurality of data records comprises values of at least two pre-defined α numeric parameters, and wherein the retrieval of the plurality of data records is based upon converting said α numeric values into their phonetic form prior to matching values of the at least two α numeric parameters comprised in each of the retrieved plurality of data records, with values of at least two α numeric parameters associated with a single user.

The term "user" as used herein throughout the specification and claims should be understood to encompass any relevant entity, such as companies, people etc.

The term "data record" as used herein throughout the specification and claims should be understood to encompass, a record which comprises values of α numeric parameters and optionally values of numeric parameters. For example, parameters associated with the identification of an entity (e.g. a first name, a surname, a nickname, etc.), addresses in various software applications such as Facebook®, Skype®, mail, e.g. gmail®, yahoo® etc., residential address, mailing address, company at which the contact is employed, work address and the like.

The term "language" as used herein throughout the specification and claims should be understood to encompass only a human language, whereas the term "different language(s)" as used herein throughout the specification and claims should be understood to encompass, different human languages as well as a human language and a modified form thereof, for example, a slang version derived from an original human language.

The term "information source" as used herein throughout the specification and claims should be understood to encompass any applicable source for information, such as databases, text files, metadata, web sites, xml/Jason files, specific data forms (e.g. financial transaction (swift) files), and the like.

The term "phonetic form" as used herein throughout the specification and claims should be understood to encompass the vocal form to which the α numeric values are converted to (e.g. sound) as well as phonetic notations which are the visual representation of the speech sounds (or phonemes). For example: science /sai/ vs. conscience /∫/, prejudice /prε/ vs. prequel /pri:/.

The term "matching" as used herein when describing matching of values of the at least two α numeric parameters, should be understood by those skilled in the art as an action that can be either rule-based or fuzzy logic based, and wherein the latter option comprises either configurable *ad-hoc* mechanism or use of a threshold that is automatically acquired (e.g. learnt from preceding matching actions).

According to another embodiment, the retrieval of the plurality of data records is based upon conversion of the α numeric values into their phonetic form.

In accordance with another embodiment, the retrieval of the plurality of data records is carried out irrespective of whether the at least one information source is configured to store data in one or more different languages.

By yet another embodiment, the method further comprising a step of generating a map that enables accessing all data records that pertain to a single user that are stored in the one or more information sources.

According to still another embodiment, the method provided comprises the steps of:
receiving values of a plurality of α numeric parameters, wherein the values received pertain to a single user;
converting the α numeric values into a corresponding plurality of phonetic records, wherein each of the plurality of phonetic records is essentially identical to the pronunciation of the corresponding α numeric value in a language at which data is stored in the at least one information source (e.g. in a language at which data is store in the information source that is about to be searched);
converting each of the phonetic records to a respective data entry, thereby obtaining a plurality of data entries;
generating at least one group that comprises at least two data entries, wherein the data entries that belong to one of the at least one group are each derived by converting a different α numeric value into a phonetic record which in turn was converted into the data entry, and wherein all data entries that belong to the group are associated with a single user;
selecting one of the at least two data entries comprised in a group, and searching the at least one information source to retrieve data records that are associated with the selected data entry;
determining which of the retrieved data records, is also associated with at least one other of the data entries belonging to said group.

The method described herein throughout the speciation and claims refers to a process whereby a first match is obtained between the data entry that was derived from the value of a first α numeric parameter, then, after obtaining a first screening of data records stored in the information source being searched which comprise essentially the same value of the α numeric parameter, identifying from among these data records, which are the data records that comprise a value of another α numeric parameter that matches a received value of that other α numeric parameter, and so on. However, it should be understood by those skilled in the art that any method which enables identifying data records that comprise values of α numeric parameters that match the values of the α numeric parameters received and pertain to a single user, are all encompassed by the present invention.

In accordance with a further embodiment, the at least one of the data records is stored in an encoded form, and wherein the method further comprises a step of decoding the at least one encoded data record. Preferably, the step of determining which of the retrieved data records is also associated with at least one other of the data entries belonging to the above group, is carried out for after the at least one encoded data record has been decoded.

The term "encoded" as used herein throughout the specification and claims, is used to denote a data record which was either encoded and stored in its encoded form in an information source, or was encrypted and stored in its encrypted form in an information source.

According to another embodiment, the method provided further comprises a step of generating a respective information source pointer (e.g. an index, a cursor) for each of the data records that is determined as being a data record associated with at least two of the data entries comprised in that group, and wherein the pointers thus generated are configured to indicate location of respective data record within the at least one information source.

The term "pointer" (or alternatively an information source pointer) is used herein to denote a control structure that enables traversal over the records stored in an information source. Such pointers facilitate subsequent processing in conjunction with the traversal, such as retrieval, addition and removal of information source records.

In accordance with another embodiment, the method provided further comprises a step of consolidating all pointers that indicate the locations of data records retrieved for the data entries comprised in a single group into a computer record, thereby generating a map to leading to data records that comprise information that is associated with the respective single user.

By yet another embodiment, at least two of the pointers that are consolidated into a computer file associated with the respective single user, indicate locations of data records stored in at least two information sources, wherein each of the at least two information sources is configured to hold data records stored in a language that is different from a language at which data records are stored in at least one other information source.

According to still another embodiment, the computer record is stored as a software object or as a file in an executable form.

In accordance with still another embodiment, the method provided further comprises a step whereby for each of the at least one group, retrieving information comprised in the respective at least two data records, and storing the information in a pre-defined information source different from the at least one information source.

According to another aspect of the present disclosure, there is provided a system configured to enable retrieval of a plurality data records pertaining to a single user, wherein the data records are stored in at least one information source, and wherein each of the plurality of data records comprises values of at least two α numeric parameters, and wherein the retrieval of the plurality of data records is based upon matching values of the at least two α numeric parameters stored in each of the retrieved plurality of data records, with values of at least two α numeric parameters associated with a single user, the system comprising:
at least one information source adapted to store a plurality of data records, each comprising values of at least two pre-defined α numeric parameters;
one or more processors operative to:
   receive α numeric values of at least two pre-defined parameters that pertain to a single user;
   convert the α numeric values received into a corresponding plurality of phonetic records, wherein each of said plurality of phonetic records is essentially identical to the pronunciation of the corresponding α numeric value in a language at which data is stored in the at least one information source;
   convert each of the phonetic records to a respective data entry, thereby obtaining a plurality of data entries;
   generate at least one group that comprises at least two data entries, wherein the data entries that belong to one of the at least one group are each derived by converting a different α numeric value into a phonetic record which in turn was converted into the data entry, and wherein all data entries that belong to that group are associated with a single user;
   select one of the at least two data entries comprised in a group, and searching the at least one information source to retrieve data records that are associated with the selected data entry, in other words, the retrieval of the suitable data records is done by identifying data records that are stored in the at least one information source which have values of the at least two α numeric parameters which match the values of the α numeric values received;
   determine which of the retrieved data records, is also associated with at least one other of the data entries belonging to that group.

By still another embodiment, the one or more processors are further configured to generate a pointer for each of the determined data records, wherein the pointer is adapted to indicate a location of a respective data record within the at least one information source, and to consolidate all pointers that indicate locations of data records retrieved for the data entries comprised in a single group, into a computer record, thereby generating a map adapted to enable access to data records that comprise information associated with the respective single user.

According to another embodiment, the one or more processors are configured to retrieve the plurality of data records irrespective of whether the at least one information source is configured to store data in one or more different languages.

In accordance with yet another embodiment, the one or more processors are configured to store information retrieved from respective at least two data records in a pre-defined information source, different from said at least one information source.

By another embodiment, at least two of the pointers that are consolidated into a computer file associated with the respective single user, indicate locations of data records stored in at least two different information sources, wherein each of the at least two different information sources is configured to hold data records stored in a language that is different from a language at which data records are stored in at least one other information source.

In accordance with another embodiment, the one or more processors are configured to enable storing the computer record as a software object or as a file in an executable form.

According to another embodiment, the system provided further comprising a user interface, to enable providing the at least two α numeric values that pertain to the single user.

According to yet another aspect of the present disclosure, there is provided a non-transitory computer readable medium storing a computer program for performing a set of instructions to be executed by one or more computer processors, the computer program is adapted to perform a method for enabling retrieval of a plurality data records pertaining to a single user, wherein the data records are stored in at least one information source, and wherein each of the plurality of data records comprises values of at least two pre-defined α numeric parameters, the method comprising:
receiving a plurality of α numeric values pertaining to a single user;
converting the α numeric values into a corresponding plurality of phonetic records, wherein each of said plurality of phonetic records is essentially identical to the pronunciation of the corresponding α numeric value in a language at which data is stored in the at least one information source;
converting each of the phonetic records to a respective data entry, thereby obtaining a plurality of data entries;
generating at least one group that comprises at least two data entries, wherein said data entries that belong to one of the at least one group are each derived by converting an α numeric value of a different parameter into a phonetic record which in turn was converted into the data entry, and wherein all data entries that belong to the group are associated with a single user;
selecting one of the at least two data entries comprised in a group, and searching the at least one information source to retrieve data records that are associated with said selected data entry;
determining which of the retrieved data records, is also associated with at least one other of the data entries belonging to the group.

In accordance with another embodiment, the method performed by program stored at the non-transitory computer readable medium, further comprising a step of generating a pointer for each of the data records that is determined as being a data record associated with at least two of the data entries comprised in that group, wherein the generated pointer is configured to indicate a location of a respective data record within the at least one information source.

By yet another embodiment, the method performed by program stored at the non-transitory computer readable medium, further comprising a step of consolidating all pointers that indicate the locations of data records retrieved for the data entries comprised in a single group into a computer record, thereby generating a map to leading to data records that comprise information that is associated with the respective single user.

According to still another embodiment, the method performed by program stored at the non-transitory computer readable medium, further comprising storing the computer record as a software object or as a file in an executable form.

### Brief Description of the Drawings

For a more complete understanding of the present invention, reference is now made to the following detailed description taken in conjunction with the accompanying figures, wherein
**FIG. 1** demonstrates a method construed in accordance with a first embodiment of the present invention; and
**FIG. 2** demonstrates a method construed in accordance with another embodiment of the present invention.

### Detailed Description

In this disclosure, the term "comprising" is intended to have an open-ended meaning so that when a first element is stated as comprising a second element, the first element may also include one or more other elements that are not necessarily identified or described herein, or recited in the claims.

In the following description, for the purposes of explanation, numerous specific details are set forth in order to provide a thorough understanding of the present invention. It should be apparent, however, that the present invention may be practiced without these specific details.

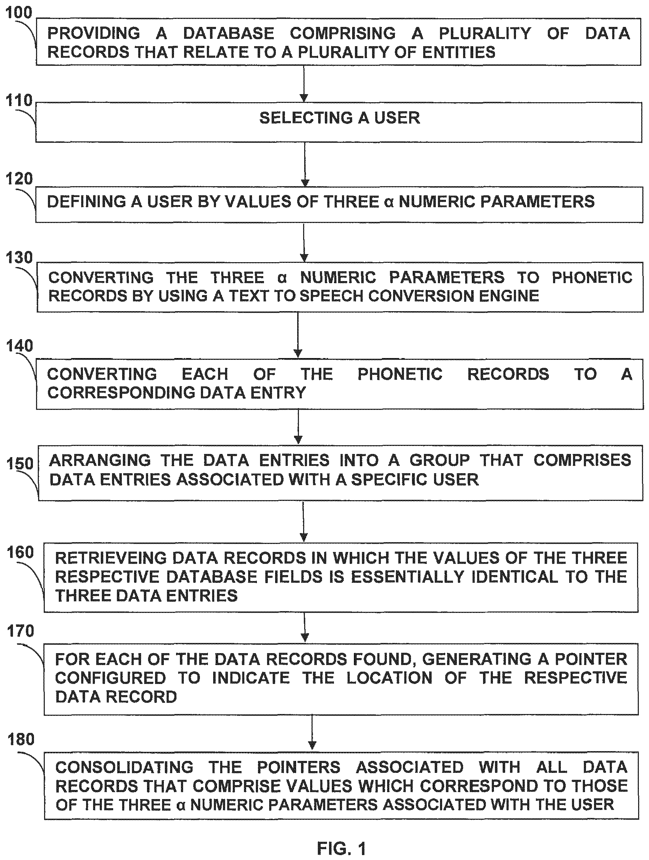

For the example illustrated in the flow chart of FIG. 1, let us assume that there is one database that comprises among others, data records associated with a certain user (step 100). Naturally, these data records do not include the same information, but they include, among others, an α numeric field for the parameter "user first name", another α numeric field for the parameter "user surname" and a third α numeric field for the parameter "user residential address".

Before describing the process, it should be noted that carrying out a simple search by inserting say the user name might not provide the appropriate solution required (i.e. finding all data records that pertain to that user), as there could be a typo in the user bane when inserting one or more of the data records, and consequently if the user name is misspelled in one or more data records, they will not be associated to the user.

Now, in order to enable generating the map that can be used for the retrieval of all the information associated with a single user which has been stored within the information source, the following process is carried out.

A user to whom an access is required to all information available in these two information sources (e.g. data records), has been defined by his name (first name and his surname, e.g. "John" "Smith") as well as his residential address (e.g. "Water Street New York USA") (step 110) and these values of the α numeric parameters mentioned above (i.e. first value = John; second value = Smith; and third value = Water Street New York USA, are inserted as an input to a software application which operates in accordance with an embodiment of the present invention (step 120).

The values of these three α numeric parameters (step 120) are then converted (e.g. by using a text to speech conversion application that converts text to speech) each into a corresponding phonetic record, thereby obtaining a plurality of phonetic records which are essentially identical to the pronunciation of the respective values of α numeric parameters inserted to the software application. In other words, each phonetic record sounds the way the value of its respective α numeric parameter is pronounced in the language at which the data records are stored in the information source, e.g. English (step 130) .

Each of the phonetic records is then converted into a respective data entry (step 140), and the data entries are arranged in a group (step 150) that comprises the three data entries that are associated with that specific user. This way, the group contains in this example the digital representations of the user first name, surname and address as pronounced in English.

It should also be noted that there could be cases where the values of the α numeric parameters, when converted to phonetic may sound somewhat different than expected, and consequently the data entry for the user's first name might be interpreted somewhat differently, or a number of options might be considered for the user's first name. However, by implementing a procedure that involves the use of values of at least two α numeric parameters (first name, surname and address in the present example), the results obtained are rather satisfactory as was found in a test conducted.

Next, one of the three entries, say the one that represents "Water Street New York USA" is selected, and a search is carried out for all entries that are included in the information source that comprise this value, or even a similar one, for the α numeric parameter residential address (step 160).

A further search will then be carried out from among all data records for which the address parameter has been identified as having the value of "Water Street New York USA" or a similar value thereto, to determine which of these data records has the value of "John" in the field of the first name parameter. Similarly, once this search has been completed, a third search is carried out from among all data records for which the address parameter has the value of "Water Street New York USA" (or similar), and the first name parameter has the value of "John" (or similar) to identify which of these data records has also the value of "Smith" in the field of the surname parameter.

Next, for each of the data records found in the information source, a respective pointer is generated (step 170), which is configured to indicate the location of its respective data record within the information source.

The generated pointers are consolidated into a computer record, thereby generating a map that enables accessing data records that comprise information associated with the user, in the searched information source (step 180).

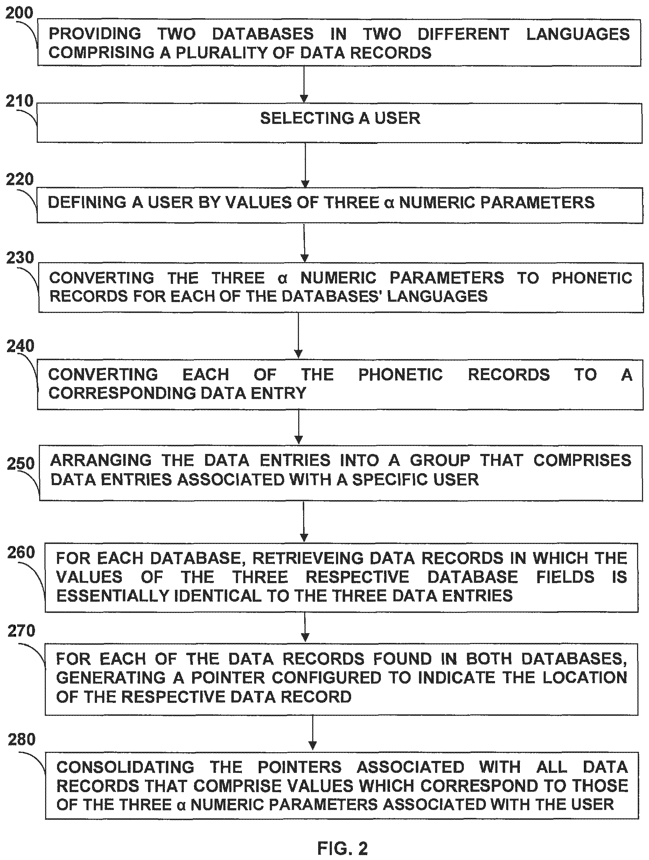

For the example illustrated in the flow chart of FIG. 2, let us assume that there are two databases that comprise among others, data records associated with a user. Furthermore, one of the databases comprises data records stored as Chinese data records, while the other database comprises data records stored in English (step 200). Naturally, the data records do not include the same information, but they both include among others, an α numeric field for the parameter "user first name", another α numeric field for the parameter "user surname" and a third α numeric field for the parameter "user residential address".

Before describing the process, it should be noted that carrying out a simple merging operation would not be effective in this example as there is no way of matching values of α numeric parameters written and stored in Chinese with values of α numeric parameters written and stored in English in order to obtain a map that is configured to indicate all data records which are associated with the same user in the various databases.

Now, in order to enable generating the map that can be used for the retrieval of all the information associated with a single user which has been stored in these two databases, the following process is carried out.

A user to whom an access is required to all information available in these two databases, has been defined by his name (first name and his surname, e.g. "John" "Smith") as well as his residential address (e.g. "Water Street New York USA") (step 210) and these values of the α numeric parameters mentioned above (i.e. first value = John; second value = Smith; and third value = Water Street New York USA, are inserted as an input to a software application which operates in accordance with an embodiment of the present invention (step 220).

The values of these three α numeric parameters (step 120) are then converted (e.g. by using a text to speech conversion application that converts Chinese text to Chinese speech) into a corresponding phonetic record, thereby obtaining a plurality of phonetic records which are essentially identical to the pronunciation of the respective values of α numeric parameters inserted to the software application. In other words, each phonetic record sounds the way the value of its respective α numeric parameter is pronounced in Chinese. According to this embodiment, the procedure is repeated in the case that the second database stores data in a different language (e.g. English), by using for example a text to speech conversion application that converts English text to English speech, into corresponding phonetic records (step 230).

Each of the phonetic records is then converted into a respective data entry (step 240), and the data entries are arranged in a group (step 250), where each group comprises the three data entries that are associated with that specific user. This way, each group contains in this example the digital representations of the user first name, surname and address as pronounced both in English and in Chinese, therefore each group may be regarded as being a group whose members may be used to search data records stored in two different databases that pertain to the same user.

However, it should also be noted that there could be cases where the values of the α numeric parameters, when converted to speech may sound somewhat different in two different languages, and consequently the data entry for the user's first name in English, may be slightly different from the one in Chinese, thus if one were to use the value of a single α numeric parameter, the retrieval of data records from both data bases might yield result to information that pertains to two different user. However, by implementing a procedure that involves the use of values of at least two α numeric parameters (first name, surname and address in the present example), the results obtained are rather satisfactory as was found in test conducted while using such different databases.

Next, let us assume that the first database to be searched for data records that pertain to our user, is the Chinese database. One of the three entries, say the one that represents "Water Street New York USA" is selected, and a search is carried out for all entries that are included in the Chinese database that comprise this value for the α numeric parameter residential address (step 260).

A further search is now carried out from among all data records for which the address parameter has the value of "Water Street New York USA", to identify which of the data records has the value of "John" in the field of the first name parameter. Similarly, once this search has been completed, a third search is carried out from among all data records for which the address parameter has the value of "Water Street New York USA", and the first name parameter has the value of "John" to identify which of these data records has also the value of "Smith" in the field of the surname parameter.

A similar procedure is then repeated for data records that are included in the English database.

Next, for each of the data records found in both databases, a respective pointer is generated (step 270), which are each configured to indicate the location of its respective data record within the two databases.

The generated pointers are consolidated into a computer record, thereby generating a map that enables accessing data records that comprise information associated with the user, in both databases (step 280).

The present invention has been described using detailed descriptions of embodiments thereof that are provided by way of example and are not intended to limit the scope of the invention in any way.

The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A method for enabling retrieval of a plurality of data records pertaining to a single user, wherein said data records are stored in at least one information source, wherein each of the plurality of data records comprises values of at least two pre-defined α numeric parameters, and wherein the retrieval of the plurality of data records is based upon converting said α numeric values into their phonetic form prior to matching values of the at least two α numeric parameters comprised in each of the retrieved plurality of data records, with values of at least two α numeric parameters associated with a single user.

2. The method of claim 1, wherein the retrieval of said plurality of data records is carried out irrespective of whether the at least one information source is configured to store data in one or more different languages.

3. The method of claim 1, further comprising a step of generating a map that enables accessing all data records that pertain to a single user that are stored in said at least one information source.

4. The method of claim 1, which comprises the steps of:
receiving values of a plurality of α numeric parameters, wherein said values pertain to a single user;
converting the α numeric values into a corresponding plurality of phonetic records, wherein each of said plurality of phonetic records is essentially identical to the pronunciation of the corresponding α numeric value in a language at which data is stored in the at least one information source;
converting each of the phonetic records to a respective data entry, thereby obtaining a plurality of data entries;
generating at least one group that comprises at least two data entries, wherein said data entries that belong to one of said at least one group are each derived by converting a different α numeric value into a phonetic record which in turn was converted into said data entry, and wherein all data entries that belong to said group are associated with a single user;
selecting one of the at least two data entries comprised in a group, and searching the at least one information source to retrieve data records that are associated with said selected data entry;
determining which of the retrieved data records, is also associated with at least one other of said data entries belonging to said group.

5. The method of claim 4, further comprising a step of generating a respective pointer for each of said data records that is determined as being a data record associated with at least two of the data entries comprised in said group, and wherein the pointers thus generated are configured to indicate location of respective data record within the at least one information source.

6. The method of claim 5, further comprising a step of consolidating all pointers that indicate the locations of data records retrieved for the data entries comprised in a single group into a computer record, thereby generating a map to leading to data records that comprise information that is associated with the respective single user.

7. The method of claim 4, further comprising a step whereby for each of the at least one group, retrieving information comprised in the respective at least two data records, and storing the information in a pre-defined information source different from the at least one information source.

8. The method of claim 6, wherein at least two of the pointers that are consolidated into a computer file associated with the respective single user, indicate the locations of data records stored in at least two information sources, wherein each of the at least two information sources is configured to hold data records stored in a language that is different from a language at which data records are stored in at least one other information source.

9. The method of claim 6, wherein said computer record is stored as a software object or as a file in an executable form.

10. A system configured to enable retrieval of a plurality data records pertaining to a single user, wherein the data records are stored in at least one information source, and wherein each of the plurality of data records comprises values of at least two α numeric parameters, and wherein the retrieval of the plurality of data records is based upon matching values of the at least two α numeric parameters stored in each of the retrieved plurality of data records, with values of at least two α numeric parameters associated with a single user, the system comprising:
at least one information source adapted to store a plurality of data records, each comprising values of at least two pre-defined α numeric parameters;
one or more processors operative to:
receive α numeric values of at least two pre-defined parameters that pertain to a single user;
convert the α numeric values received into a corresponding plurality of phonetic records, wherein each of said plurality of phonetic records is essentially identical to the pronunciation of the corresponding α numeric value in a language at which data is stored in the at least one information source;
convert each of the phonetic records to a respective data entry, thereby obtaining a plurality of data entries;
generate at least one group that comprises at least two data entries, wherein said data entries that belong to one of said at least one group are each derived by converting a different α numeric value into a phonetic record which in turn was converted into said data entry, and wherein all data entries that belong to said group are associated with a single user;
select one of the at least two data entries comprised in a group, and searching the at least one information source to retrieve data records that are associated with said selected data entry; and
determine which of the retrieved data records, is also associated with at least one other of said data entries belonging to said group.

11. The system of claim 10, wherein said one or more processors are further configured to generate a pointer for each of said determined data records, wherein said pointer is adapted to indicate a location of a respective data record within the at least one information source and to consolidate all pointers that indicate locations of data records retrieved for the data entries comprised in a single group into a computer record, thereby generating a map adapted to enable access to data records that comprise information associated with the respective single user.

12. The system of claim 11, wherein at least two of the pointers that are consolidated into a computer file associated with the respective single user, indicate locations of data records stored in at least two different information sources, wherein each of the at least two different information sources is configured to hold data records stored in a language that is different from a language at which data records are stored in at least one other information source.

13. The system of claim 10, further comprising a user interface to enable providing said at least two α numeric values that pertain to the single user.

14. A non-transitory computer readable medium storing a computer program for performing a set of instructions to be executed by one or more computer processors, the computer program is adapted to perform a method for enabling retrieval of a plurality data records pertaining to a single user, wherein the data records are stored in at least one information source, and wherein each of the plurality of data records comprises values of at least two pre-defined α numeric parameters, the method comprising:
receiving a plurality of α numeric values pertaining to a single user;
converting the α numeric values into a corresponding plurality of phonetic records, wherein each of said plurality of phonetic records is essentially identical to the pronunciation of the corresponding α numeric value in a language at which data is stored in the at least one information source;
converting each of the phonetic records to a respective data entry, thereby obtaining a plurality of data entries;
generating at least one group that comprises at least two data entries, wherein said data entries that belong to one of said at least one group are each derived by converting an α numeric value of a different parameter into a phonetic record which in turn was converted into said data entry, and wherein all data entries that belong to said group are associated with a single user;
selecting one of the at least two data entries comprised in a group, and searching the at least one information source to retrieve data records that are associated with said selected data entry;
determining which of the retrieved data records, is also associated with at least one other of said data entries belonging to said group.

15. The non-transitory computer readable medium of claim 14, wherein said method further comprising a step of generating a pointer for each of said data records that is determined as being a data record associated with at least two of the data entries comprised in said group, and wherein said generated pointer is configured to indicate a location of a respective data record within the at least one information source.

16. The non-transitory computer readable medium of claim 14, wherein said method further comprising a step of consolidating all pointers that indicate the locations of data records retrieved for the data entries comprised in a single group into a computer record, thereby generating a map to leading to data records that comprise information that is associated with the respective single user.

17. The non-transitory computer readable medium of claim 16, wherein said method further comprising storing said computer record as a software object or as a file in an executable form.
